# EUROPEAN PATENT SPECIFICATION

(11) **EP 4 631 789 B1**
(45) Date of publication and mention of the grant of the patent: **07.10.2026**
(21) Application number: 24169261.5
(22) Date of filing: 09.04.2024
(51) Int. Cl.: B60Q 1/30, B60Q 1/38, B60Q 1/46, B60Q 11/00

(54) **VEHICLE LIGHTING ASSEMBLY WITH A TWO-PART LAMP**
FAHRZEUGBELEUCHTUNGSANORDNUNG MIT EINER ZWEITEILIGEN LAMPE
ENSEMBLE D'ÉCLAIRAGE DE VÉHICULE AVEC UNE LAMPE EN DEUX PARTIES

(43) Date of publication of application: 15.10.2025
(73) Proprietor: Hella Autotechnik Nova s.r.o., 78985 Mohelnice (CZ)
(72) Inventor: Bednar, Adam, 56166 Techonin (CZ); Koreny, Martin, 74741 Jakubcovice (CZ); Kotulek, Tomas, 70800 Ostrava (CZ); Koukal, Petr, 796 01 Prostejov (CZ); Krautwurst, Pavel, 751 03 Brodek u Prerova, (CZ); Stuchlik, Ales, 739 41 Palkovice (CZ); Zeleny, Jaroslav, 77900 Olomouc (CZ)
(74) Representative: Behr-Wenning, Gregor

(56) References cited:
- WO-A1-2009/091308
- WO-A1-2023/033138
- DE-A1- 102022 115 153
- FR-A1- 3 017 085
- FR-A1- 3 042 376
- FR-A1- 3 096 434
- JP-A- 2022 101 858

## Description

### Technical field

The present invention relates to automotive lighting. More specifically, it relates to lamps having multiple parts with synchronized illumination functions, and to handling situations where some of the parts stop working and other parts or other lamps than need to adjust their functions.

### Background of the Invention

Two-part vehicle lamps, where the parts can be mechanically unconnected, but they form a single lamp, are known in the art. A typical case is an automobile taillight having one part mounted to a trunk lid and the other part to the automobile's body. The lid rotates with respect to the body when opened which is why the two parts are independently mounted and are not mechanically connected. Both parts however need to be synchronized, e.g., the same illumination functions need to be on and off at the same times. Another example of a two-part lamp can be headlight which is partially incorporated in a front grille of the vehicle. Besides turn signals, other examples of illumination functions which are often divided between multiple parts of a lamp include daytime running lights, welcome lights or brake lights.

When one of the parts of a multi-part lamp stops working, the other part(s) can still maintain the illumination function, e.g., a brake light is still operational as required even if only a part of the lamp is lit. The appearance of the vehicle is however deteriorated in such a situation, because one side of the vehicle has a larger illuminated area that the other side with the damaged part.

For animated illumination functions, this problem becomes even more serious or at least distracting. Animated functions are often used e.g., for turn signals or welcome lights, and can include sequential switching of individual light sources. This means that at times, only light sources in one of the lamp parts can be turned on, and if this part is non-functional, then the whole lamp is dark even if the illumination function is on and light should be emitted from the lamp.

Illumination systems which to some extent adjust illumination of one lamp, when a part of another lamp is faulty, are disclosed in documents FR3096434 and WO2023033138. All illumination modules in each lamp are controlled by a control unit of the lamp, which communicates with a supervisory control unit common for both lamps.

It would therefore be advantageous to provide a solution to this problem, so that any required illumination function would be sufficient even if a part of a multi-part lamp becomes non-functional.

### Summary of the Invention

The shortcomings of the solutions known in the prior art are to some extent eliminated by a vehicle lighting assembly comprising a first lamp, and a second lamp, wherein the first lamp is a two-part vehicle lamp comprising a primary part and a secondary part. The primary part and the secondary part can be separated from each other, e.g., such that they can be moved relative to each other. Each part can then have its own power connection, its own casing, its own optics etc. The parts can however also be a part of a common illumination device and can thus e.g., share a frame or a casing. The parts can provide different illumination functions or the same illumination functions, or some functions which are the same and other functions which are different (e.g., a turn signal can be provided by both parts of a headlight, while high-beam is provided only by a primary part).

The primary part has a primary light source and a primary control unit for controlling the primary light source. The light source can e.g., be an array of LEDs, and it can include optical elements such as lens, reflectors, cover lens, colored cover lens etc. The primary control unit can e.g., be a microprocessor or other computing element located inside of the primary part, e.g., on a PCB which also carries LEDs of the primary light source. It is also possible to have a primary control unit outside of the primary part's casing, e.g., if it is a part of an assembly control unit which controls multiple lamps.

The secondary part has a secondary light source and a secondary control unit for controlling the secondary light source. The light source can e.g., be an array of LEDs, and it can include optical elements such as lens, reflectors, cover lens, colored cover lens etc. The secondary control unit can e.g., be a microprocessor located inside of the secondary part, e.g., on a PCB which also carries LEDs of the primary light source. The secondary control unit can alternatively also be located in the primary part, e.g., it can be included in the primary control unit as a hardware or software submodule.

The two control units are communicatively connected. The connection can be a cable connection or wireless connection. It can be a communication via a bus, such as CAN bus, and/or communication via another control unit, e.g., a unit controlling the whole assembly or the whole vehicle. The secondary control unit is configured for controlling the secondary light source based on instructions received from the primary control unit. The primary control unit can thus maintain synchronization between the two parts since it controls illumination of both. The primary control unit and the secondary control unit can thus work according to a master-slave model.

The lamp can have multiple secondary parts, e.g., multiple modules. There is preferably only one primary part. The multiple parts preferably share some illumination function (e.g., a turn signal divided between multiple lamp parts) or some part(s) can take over a function of another part(s) (e.g., a daytime running light function can be done be a low-beam module if dedicated daytime running module stops working). The invention then ensures that the shared illumination function is provided symmetrically, if needed, or that the function is taken over symmetrically on the second lamp, if needed.

The primary control unit is configured to verify whether the secondary part is functional. For example, it can communicate with the secondary control unit continuously or repeatedly whenever the ignition is turned on, and if the secondary control unit stops responding at any point, the primary control unit considers the secondary part non-functional. The verification can also for example be in form of receiving an information that the secondary part is non-functional, e.g., from another control unit (e.g., of the assembly or the whole vehicle). The verification can also include receiving data from sensors, e.g., to detect whether the secondary part receives any current, whether it emits any light, whether it is mechanically broken etc.

If the secondary part is non-functional, the primary control unit is further configured to communicate information about the secondary part being non-functional to another component of the assembly. The configuration of the control unit, or of any other control unit, can have the form of providing software instructions which, when run by the unit, provide the desired function.

The another component can especially by the second lamp or a part thereof, or a control unit which can influence functioning of the second lamp. The communication can thus be simply sending the information to the another component, but it can also have the form of directly or indirectly controlling the second lamp to adjust its illumination as described below. The information can thus be communicated implicitly as a part of a control signal or other data, or explicitly where the another component processes and uses this information as needed.

The assembly is configured for adjusting illumination function of the second lamp based on the information about the secondary part being non-functional. This configuration can be implemented in any of the control units (of the first lamp, of the second lamp, of the whole assembly or vehicle etc.). The adjustment can for example be in the form of turning the secondary part of the second lamp off, so that both lamps then provide symmetrical illumination. When the secondary part is off (regardless of whether it is in the first lamp and it is non-functional, or it is just switched off intentionally in the second lamp), the corresponding primary part can have its illumination function adjusted, e.g., to prevent any problems connected to animation.

For example, if the vehicle has animated turn signals, e.g., a row of LEDs providing orange light has its individual LEDs switched on in a sequence during each "blink" of the turn signal, the non-functioning secondary part will disrupt this animation. E.g., the turn signal could then be off between the "blinks" for too long, and it would be more difficult to spot for other drivers. The adjustment of the illumination function can then include replacing the animation with simple turning of all the LEDs on and then off at once, as is done for non-animated turn signals. The turns signals then maintain their proper function even with one part of any lamp being damaged.

This example with turn signals is especially important in cases when both the first lamp and the second lamp are headlights or they are both taillights, since any non-symmetry in turn signal or hazard lights is then very apparent whenever they are on. The invention can however analogously function when the first lamp is a headlight and the second lamp a taillight, e.g., on the same side, or vice versa. For example, the animation of some illumination function can be switched off on the whole vehicle, when one of the secondary parts stops being functional. All four main lamps of the vehicle - both headlights and both taillights, can then be a part of the assembly. Two or all four of the lamps can then be two-part lamps with the functionality of the invention. Non-functioning of any of secondary parts of any of the lamps can then influence function of any part of any other lamp, as needed to maintain sufficient illumination, to limit deterioration of appearance of the vehicle etc. A skilled person can define and implement the adjusting in various ways which will be apparent from the information provided in this description. Functional, aesthetical and/or legal requirements can be taken into consideration when designing the illumination function adjustment, such that a proper function according to any or all of these criteria can be maintained despite the non-functionality of some lamp parts.

The present invention can thus improve functionality as well as appearance of vehicle illumination. The assembly can include two lamps, which are then preferably both at the front, both at the back, both on the left or both on the right; it can include three lamps (e.g., both headlights and an illuminated front grille; both taillights and an illuminated trunk lid; headlight, taillight and a further lamp (e.g. a side mirror turn signal) on one side etc.); it can include four lamps, which are then preferably all four main lamps of the vehicle as described above); and it can include even more lamps, such as all exterior lamps of a vehicle. Many combinations of functionalities in different cases can then be thought of and implemented based on the main concept of the invention where non-functioning of a secondary part of any lamp can cause change in operation of any other lamp (and potentially also of the same lamp).

The illumination function which gets adjusted in the present invention can be any function of any vehicle lamp. It can especially be an animated function, e.g., a function where the light source has more states than merely being on or off. Animated illumination functions are especially suitable for turn signals and hazard lights (which are often provided by the same light sources), for daytime running lights, for welcome lights and for brake lights (where the animation can e.g., provide information about braking intensity). For welcome lights, the invention can be especially useful, since they provide the most opportunities for various animations since they occur when the vehicle is parked, and adjustment of the animation can further serve to inform the driver that some part of some lamp is not functioning properly.

The another component of the assembly can be selected from a control unit of the assembly, a control unit of the vehicle and a control unit of the second lamp. For example, the assembly can include an assembly control unit which controls all the illumination of given vehicle or all its external illumination etc. The individual control units of individual lamp can then control their own illumination and provide data to the assembly control unit, e.g., data about functionality of their respective secondary parts, and the assembly control unit decides when and how to adjust any illumination function. The same function can also be performed by a control unit of the whole vehicle instead of an assembly control unit.

The adjusting of illumination function can also be performed by a lamp control unit of one of the lamps or of each lamp individually. E.g., the second lamp receives information that the first lamp's secondary part is non-functional, and it operatively decides when it will keep its own secondary part off, e.g., based on whether the first lamp is providing the same illumination function (e.g., hazard lights on both sides of the vehicle) or not (e.g., turn signal). It is also possible, as another example, that the primary control unit of the first lamp directly switches off the secondary part of the second lamp if the secondary part of the first lamp stops being functional and vice versa.

The adjusting of illumination function can further be based on a condition of the vehicle. This condition can e.g., be one or more of the following: braking of the vehicle, the state of hazard lights, identification of a desired illumination function (especially of the function which is potentially to be adjusted), the state of turn signals, the state and settings of welcome lights, the state of ignition or engine, speed of vehicle, weather, sunlight intensity etc.

These or further or other conditions can be an input to a control unit which decides when and how to adjust the illumination function. The identification of the desired illumination function can e.g., carry information whether the illumination function is normally provided at least partially by the non-functional secondary part. If so, then some adjusting of the function might be needed to compensate for the non-functionality. For example, if the desired function is an animated brake light provided by both taillights (each having two parts) and by a further lamp on the trunk lid, it might be appropriate to make the brake light symmetrical and thus to turn off the brake light on the secondary part of the second lamp. It might also be appropriate to change the animation or to turn it off completely and simply having an on state and an off state of the brake light as usual. The animation adjustment then means that the illumination function is adjusted on the first lamp, the second lamp (both taillights) and on the third lamp which is the additional brake light on the trunk lid.

If the desired illumination function is a turn signal or hazard light, an animation of this light can be adjusted over multiple lamps around the whole vehicle perimeter, e.g., both headlights, both taillights, front grille /front mask lamp, side mirror turn signal lamps, etc. It can be up to a skilled person, e.g., a vehicle manufacturer or its employee(s), to decide and program into the assembly, when and how the illumination function is to be adjusted.

As mentioned above, the adjusting of illumination function can include turning off of an animated illumination function of the second lamp.

The second lamp can be a two-part lamp laterally symmetrical with respect to the first lamp, wherein the adjusting of illumination function includes turning off of the second lamp's secondary part. A control unit can still decide when the secondary part is turned off as described above.

The first lamp can be a headlight, or a taillight, and the second lamp can then be a different headlight or taillight. Headlights and taillights are the most complicated lamps on most vehicles, and they provide the most opportunities for animations, so the present invention can be especially advantageous for these lamps. Especially taillights are commonly two-part lamps. Since the two parts are usually mechanically unconnected, with one being on the vehicle body and the other on a trunk lid, tail gate or similar component, the situations where one part gets damaged and the other part remains undamaged can occur quite often, and it is thus desirable to maintain a proper function and appearance in these situations.

The primary control unit can be provided with a memory unit which comprises data for identification of multiple predefined secondary parts, wherein the primary control unit is then configured to check, during or before the verification of whether the secondary unit is non-functional, whether the secondary part is one of the predefined secondary parts.

The primary part can be thus adapted to work and control several types of secondary parts. This can typically occur for different makes of automobiles by the same manufacturer, when they all share the same primary part of a lamp, but secondary parts are (slightly) different, e.g. have more LEDs, are capable of different animations, have different shape and/or size so the animation needs to be altered etc. It can also occur for vehicles intended for different markets with different legal requirements, for example if animated lights were forbidden in some countries and the vehicle intended for that market would thus be provided with lamps incapable of animated functions.

The primary part can thus check whether it is connected (e.g., indirectly via assembly control unit) to a correct secondary part. It can, for example, request an ID number from the secondary part, followed by trying to find the received ID number in a set of predetermined ID numbers. Manufacturer of the lamp can then ensure that the primary part only has stored ID numbers of secondary parts it can actually work with. If this identification verification fails, it can be because the secondary part is a wrong kind of secondary part (it provides its ID number, but it is not included among the stored ID numbers in memory of the primary part). It can also be because the secondary part malfunctions and fails to send a correct identification signal. Both cases would lead to the secondary part being considered non-functional, and the primary part can then switch to basic functioning, e.g., without any animations or without using the secondary part at all.

The secondary part can thus be considered non-functional if it is not identified as one of the predefined secondary parts. But many more states of non-functionality can exist, and a correct identification might not be sufficient to prove a functional state.

The primary control unit can be configured to use different criteria of functionality for different secondary units. Different types of secondary units can provide different illumination functions, can have different power requirements, can have different number of pins, different response times etc. These parameters which are different between different secondary units can thus have different ranges into which they should fall during normal operation. E.g., the primary unit can receive data from a current sensor, and it can thus discover that a secondary unit is taking too much / too little current and is thus non-functional, even if a different secondary unit could be meant to work with such current. Analogously, a light intensity can be different for different secondary units etc.

The shortcomings of the state of the art are to some extend also eliminated by a method of controlling a vehicle illumination assembly, especially the assembly according to the invention. The assembly comprises at least a first lamp, which is a two-part lamp, and a second lamp, and it comprises the following steps:
- Detecting by a primary control unit of a primary part of the first lamp that a secondary part of the first lamp in non-functional. This detection can be implemented in the same way as the above-mentioned verification, e.g., it can include receiving information about the secondary part being non-functional (directly from the secondary part, from a vehicle control unit, from additional sensor(s) etc.). The primary control unit can also send signals to the secondary part and detect the non-functionality based on a response of the secondary part or based on lack of any response etc.
- Adjusting illumination function of at least the second lamp based on the detection that the first lamp's secondary part is non-functional. This adjustment can be implemented as described above for the assembly. E.g., it can include changing animation(s) or turning them off, it can include turning the whole secondary part off, it can be done for not only the second lamp but also the first lamp and/or for further lamps.

The method according to the invention can be provided by the assembly, e.g., as described above for some exemplary illumination functions and lamps. It can provide the same advantages as explained above for the assembly.

The method can further comprise checking a condition of the vehicle and adjusting the illumination function only if the condition is met. Examples of the condition(s) were also given above.

Advantageously, the condition or its checking includes checking whether a desired illumination function requires synchronization or symmetry between illumination from the first lamp and illumination from the second lamp. The symmetry can be for example a required symmetry between brake lights on the left and on the right, a symmetry of daytime running lights on the left and on the right, symmetry of hazard lights etc. Symmetry can also be required between a front light and rear light, e.g. to adjust or turn off an animation of turn signals on the whole left side of a vehicle when any of them gets damaged. The synchronization can for example be needed for animations or even simple blinking when it is provided by multiple lamps at once. For example, if the first lamp is a left taillight and the second lamp is a right headlight, there might be no direct need for symmetry between these two lamps, but their synchronization might still be required, at least to keep symmetry between the first/second lamp and other lamp(s), especially the remaining headlight and taillight. The synchronization requirement can ensure that illumination happens/starts at required times for multiple lamps, even if a secondary part of one of them stops functioning, and some illumination function thus needs to be adjusted.

If the synchronization or symmetry is required, the second lamp is controlled to provide illumination synchronized or symmetrical with illumination of the first lamp with the non-functional secondary part. I.e., the adjusting of the illumination function includes operating the second lamp such that the requirement is being met despite the non-functionality of the secondary part of the first lamp.

When the illumination function to be adjusted is a turn signal animation, the checking of the condition can include checking whether turn signals of the vehicle are to be used to indicate turning direction or as hazard lights. This information can be received from the vehicle's control unit. The turn signal animation can be simplified or turned off in the second lamp if the turn signals of the vehicle are to be used as hazard lights. For turn signal functions, symmetry might be unnecessary, since left and right sides are not illuminated by the turn signals at the same time. For hazard lights, on the other hand, symmetry is preferably maintained to prevent any confusion of other drivers.

As described above, the second lamp can be a two-part lamp, and the adjusting of illumination function can then include turning off of the second lamp's secondary part.

The step of detecting of functionality can include trying to identify the secondary unit and checking whether the secondary unit is one of multiple predefined secondary units. The method can thus include this identification, have different functionality criteria for different secondary units, and/or consider a failed identification as a proof of non-functionality. These aspects were in more detail described above for the assembly, and their implementation into the method can be the same as for the assembly.

### Description of drawings

A summary of the invention is further described by means of exemplary embodiments thereof, which are described with reference to the accompanying drawings, in which:
- Fig 1.: Shows a back view of an automobile comprising two taillights which are a part of a vehicle lighting assembly with a two-part lamp according to a first exemplary embodiment of the invention.
- Fig 2.: Shows a schematical view of the right taillight from fig. 1.
- Fig 3.: Shows a back view of the automobile from fig. 1 with a damaged secondary part of the right taillight, if it was functioning according to the state of the art, when the undamaged taillight has larger illuminated area than the damaged taillight.
- Fig 4.: Shows a back view of the automobile from fig. 3 functioning according to the first embodiment of the invention, when the non-damaged taillight is controlled such that it has the same illuminated area as the damaged taillight and the vehicle thus has a symmetrical appearance.
- Fig 5.: Shows the back view from fig. 4 in situation when the automobile turns to the right and the right taillight thus has its turn signal function on.
- Fig 6.: Shows the back view from fig. 4 in situation when the automobile turns to the left - since only the left turn signal is on, both parts of the taillight can be lit without deteriorating appearance of the automobile.
- Fig 7.: Shows a flowchart of an embodiment of a method of controlling a vehicle illumination assembly during turn signal operation, wherein this method embodiment corresponds to functioning of the first embodiment of the assembly.
- Fig 8.: Shows a flowchart of the method during hazard light operation.
- Fig 9.: Shows another flowchart depicting an embodiment of the method.
- Fig 10.: Shows another flowchart of an embodiment of the method which differs from the one from fig. 9 in that it includes identification of secondary part of each lamp, wherein failed identification has the same result as if the secondary part was non-functional.
- Fig 11.: Shows a simplified drawing of a two-part lamp which includes a memory unit in its primary part for storing identification data for secondary parts which can be used with given primary part, so that this lamp can function as described by the flowchart from fig. 10.

### Exemplary Embodiments of the Invention

The invention will be further described by means of exemplary embodiments with reference to the respective drawings.

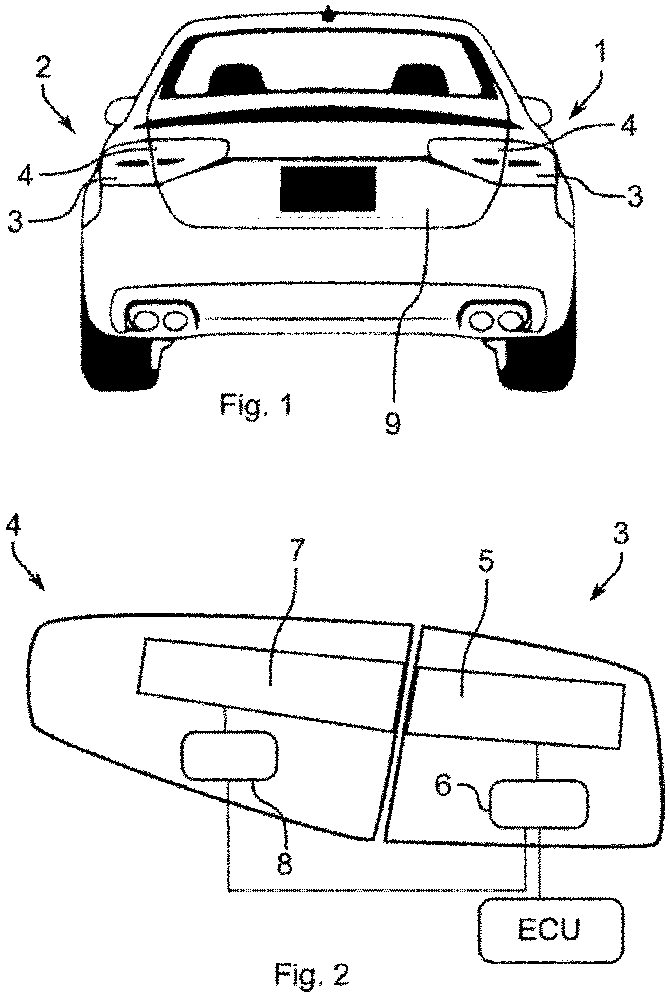

A first exemplary embodiment of the invention is a vehicle lighting assembly shown in figs. 1 to 6. The assembly includes two two-part lamps - a first lamp 1 which is a right taillight and a second lamp 2 which is a left taillight of an automobile which is shown in fig. 1. Each of the lamps includes a primary part 3 and a secondary part 4, each having its own casing, light source, cover lens, power input, control unit and connection to the automobile's CAN bus. Primary light source 5 and secondary light source 7 are both formed from LEDs and are included in multiple modules as described further below. Simplified schematic drawing of the main parts of each of the lamps is shown in fig. 2.

Each part of each of the lamps is divided into multiple modules for providing various illumination functions. The modules on the primary part 3 include brake light, turn signal (which also serves as a hazard light), standard taillight module (which provides visibility from the back), and reverse light. On the secondary part 4, the modules include only brake light and turn signal light. The simplified drawing in fig. 2 only shows the taillight modules for both parts, which form an elongated rectangle extending along the width of the lamp. The control units are programmed to provide animated turn signal. The animation has a form of sequentially turning on individual LEDs forming light sources of both turn signals wherein the sequence goes from left to right for the right lamp and from right to left for the left lamp.

Primary part 3 of each lamp is placed directly to the car body close to the fender, while the secondary parts 4 are on the trunk lid 9. In each of the two lamps, a primary control unit 6 located in the primary part 3 is in a master relationship to a secondary control unit 8 located in the secondary part 4. The secondary (slave) control unit thus controls the secondary light sources based on instructions from the primary control unit 6. The primary control units 6 communicate with the vehicle control unit (marked as ECU in fig. 2) which ensures that the lamps are on whenever needed and that they provide any desired illumination function, e.g., that the brake lights are on when the automobile decelerates.

The secondary control unit 8 of each of the lamps thus only communicates with its respective primary control unit 6 via the CAN bus. This connection also serves for letting the primary control unit 6 check whether the secondary part 4 is functional. In this embodiment, this checking has the form of repeatedly requesting a response from the secondary control unit 8, where the response includes information that all the functions of the secondary part 4, i.e., especially the brake light and the turn signal, are operational and can be switched on whenever needed. Sensors, such as current or light intensity sensor, can be provided in the secondary part 4, to enable one of the control units to confirm the functionality. If this response indicates that some function is not functioning properly or if the response is not received at all, the primary control unit 6 informs the ECU that the secondary part 4 is non-functional and/or that it cannot provide one of its functions (e.g., the brake light might be OK while the turn signal of the secondary part 4 is damaged). The ECU processes this information and controls both the lamps based on the received information.

Exemplary control of the taillight by the vehicle control unit for several possible situations and desired illumination functions (vehicle conditions) for turn signal functioning is given in table below:

| Functional | | Desired illumination function | Turn signal operation | |
|---|---|---|---|---|
| Left | Right | | Left lamp | Right lamp |
| Yes | Yes | Left turn signal | Animated on both parts | Off |
| Yes | No | Left turn signal | Animated on both parts | Off |
| No | Yes | Left turn signal | Simplified blinking on primary part, secondary part off | Off |
| No | No | Left turn signal | Simplified blinking on primary part, secondary part off | Off |
| Yes | Yes | Right turn signal | Off | Animated on both parts |
| Yes | No | Right turn signal | Off | Simplified blinking on primary part, secondary part off |
| No | Yes | Right turn signal | Off | Animated on both parts |
| No | No | Right turn signal | Off | Simplified blinking on primary part, secondary part off |
| Yes | Yes | Hazard light | Animated on both parts | Animated on both parts |
| Yes | No | Hazard light | Simplified blinking on primary part, secondary part off | Simplified blinking on primary part, secondary part off |
| No | Yes | Hazard light | Simplified blinking on primary part, secondary part off | Simplified blinking on primary part, secondary part off |
| No | No | Hazard light | Simplified blinking on primary part, secondary part off | Simplified blinking on primary part, secondary part off |

The column "Functional" shows whether the turn signal light of the secondary part 4 on given taillight is functional. The desired illumination function is a vehicle parameter known to the vehicle control unit, e.g., based on instructions received from the driver. The "Turn signal operation" column then describes the state of both parts of each taillight dependent on the desired function and on functionality of the secondary parts 4.

If both lamps have functional secondary parts 4, the turn signal operation corresponds to a normal operation for this vehicle with the turn signal lights being animated, for turn signal function as well as for hazard light function. As can be seen in the table, the hazard function is adjusted whenever at least one of the secondary parts 4 is non-functional in order to keep the vehicle illumination symmetrical as required for hazard lights. On the other hand, turn signals are not symmetrical - they are not turned on for both sides at once. Therefore, their illumination function is only adjusted if the secondary part 4 of the lamp on the side towards which the vehicle is turning is non-functional. The adjustment of the illumination function, whenever it occurs, is implemented as replacing the animation with a simple blinking, i.e., turning all LEDs of the respective light source on and then turning them all off repeatedly.

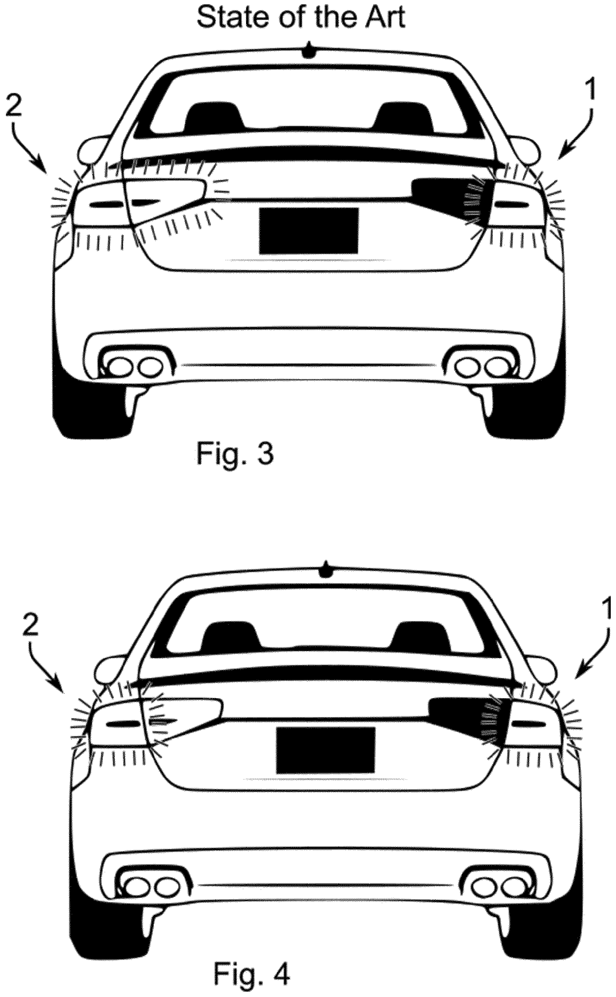

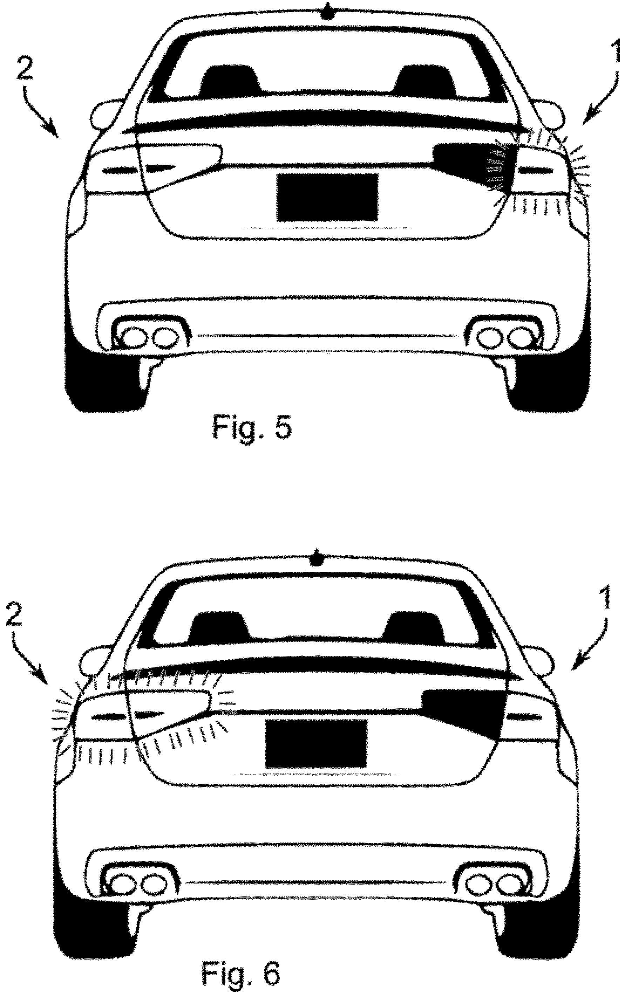

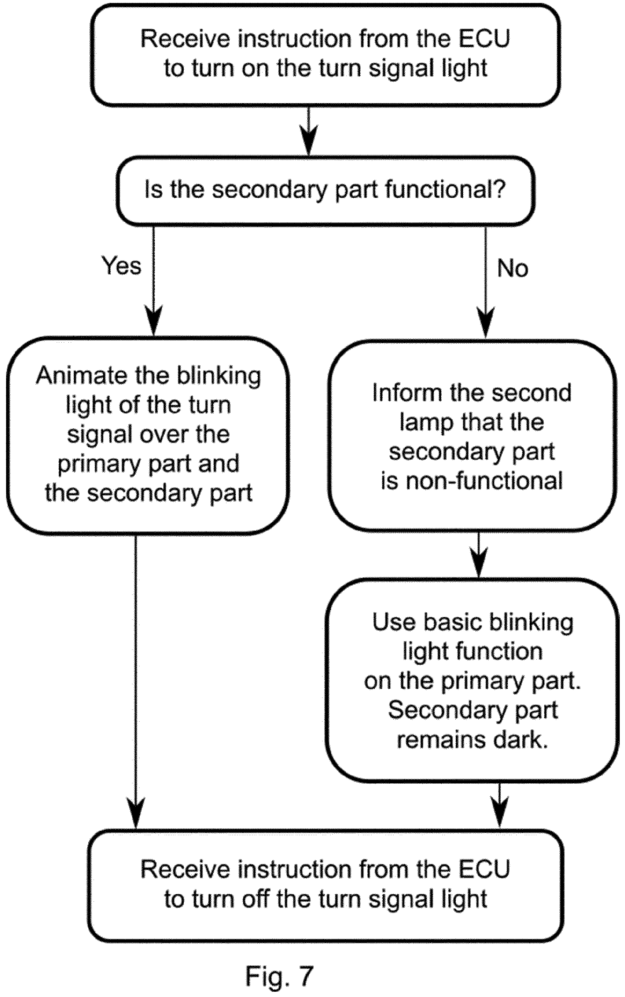

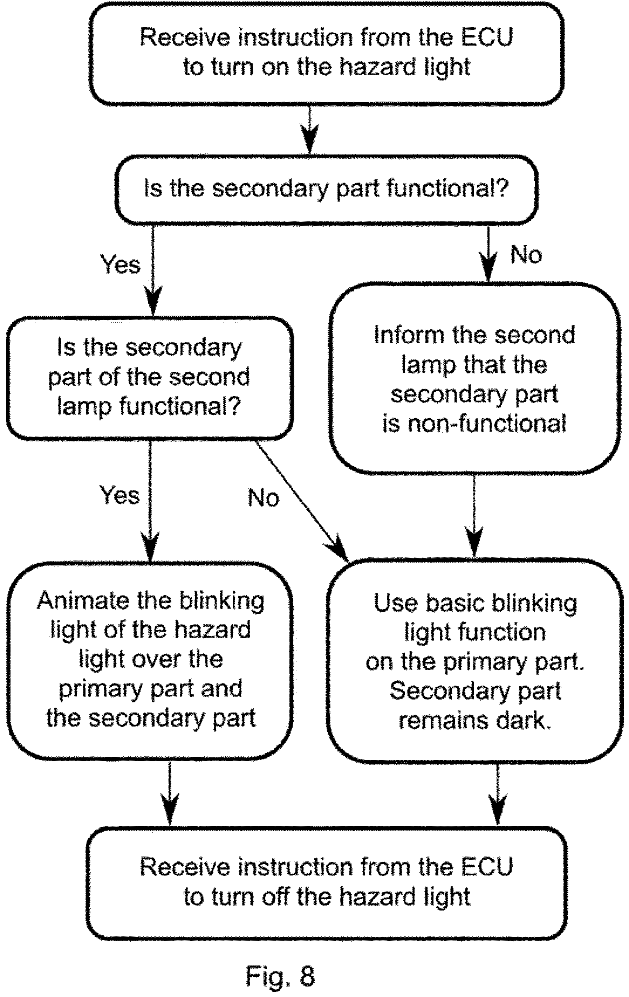

Figs. 4 to 6 show several states described in the table. The secondary part 4 of the right taillight is damaged. In the state of the art, the left taillight (which is the second lamp 2 in this situation) continues its standard operation and the vehicle is thus asymmetrically lit when the hazard lights are on (see fig. 3). The first embodiment of the invention removes this asymmetry (see fig. 4) by keeping the secondary part 4 of the left taillight off as well. During turn signal illumination, the left taillight maintains it standard animated operation over the whole lamp (see fig. 6) while the right taillight has its turn signal operation simplified and limited to the primary part 3 (see fig. 5) because it cannot properly provide the animation without the secondary part 4. The above table can also be summarized by the flowcharts from figs. 7 and 8.

A second exemplary embodiment of the invention is a method of controlling a vehicle illumination assembly, where the assembly is as described in the first embodiment of the invention. This method starts during operation of the assembly when the secondary part 4 of the first lamp 1 becomes non-functional. Both taillights forming the assembly can be the first lamp 1 or the second lamp 2 depending on which one of them has the non-functional secondary part 4.

In a first step of the method, the primary control unit 6 of the first lamp 1 receives instruction to turn on its turn signal. It detects the non-functional state of the secondary part 4, e.g., because its secondary control unit 8 stops responding. The vehicle control unit (ECU) receives information about the state of the first lamp's 1 secondary part 4. The vehicle control unit then provides this information to the primary control unit 6 of the second lamp 2. The second lamp 2 is not providing turn signal lights at this moment, so its illumination function is not adjusted yet. The primary control unit 6 of the first lamp 1 provides simplified turn signal illumination.

A second step of the method starts once the ECU receives instruction from the driver to turn on hazard lights and thus sends instruction to turn on the hazard light (which is the same hardware as turn signal lights) to both lamps. The primary control unit 6 of the second lamp 2 already has the information about non-functionality of the first lamp's 1 secondary part 4 and it's programmed to switch into the simplified animation mode. The secondary part 4 of the second lamp 2 thus has its turn signal light turned off during the hazard light illumination, even though it is functional. The first lamp 1 also received the instruction to turn on the hazard light. Its primary control unit 6 already knows that the secondary part 4 is non-functional, so it provides the hazard light in the simplified mode as well.

The functionality of both turn signals of the taillights of this method is the same as given in the table from the first embodiment. When the vehicle is turning left, the second lamp 2 provides its standard animated turn signal illumination. When turning right, the first lamp 1 provides the simplified turn signal illumination. This turn signal operation is described by fig. 7, and the hazard light operation by fig. 8. The state of the other lamp's secondary part 4 is thus only taken into consideration for the hazard light illumination, not for the turn signal illumination, in this embodiment.

The verification of functionality of the secondary part 4 can be repeated every time the lamp receives any instruction from the ECU, or it can be repeated periodically as long as the ignition is on or the engine is started. The information about non-functionality of the secondary part 4 can thus be resent repeatedly to the other lamp.

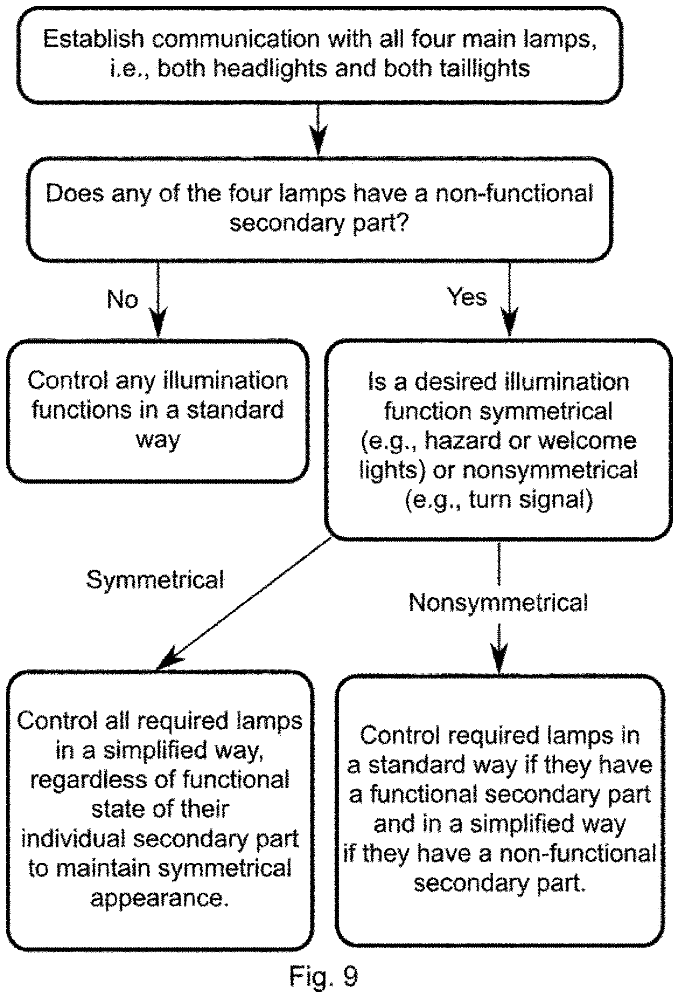

A third embodiment of the invention is a method of controlling a vehicle illumination assembly as described by the flowchart from fig. 9. In this embodiment, the assembly includes both taillights of the vehicle and both headlights, i.e., there are four two-part lamps. The secondary parts 4 of the taillights are located on the trunk lid 9 and the taillights are constructed as described above for the first embodiment. The headlights have their primary parts 3 on the vehicle body while the secondary parts 4 are on the front grille. The headlight parts thus have separated casings and power inputs, similarly to the taillights.

All the lamps provide the standard illumination functions and have the standard modules which are known from the state of the art. The taillights thus have modules as described in the first embodiment. The headlights include high beam modules, low beam modules, turn signals and daytime running lights. The assembly is controlled by an assembly control unit which is separated from the vehicle main control unit but communicates with it. Each lamp has its primary control unit 6 which is connected via CAN bus to the assembly control unit. The secondary control unit 8 of each lamp is connected only to the respective primary control unit 6 via a cable connection (i.e., not via CAN).

The assembly is adapted to provide various illumination functions given by the various modules. There are multiple illumination functions which are animated and thus are adjusted if needed, analogously to the first and second embodiments. These functions are turn signal and hazard lights (these are implemented as described above), brake lights (where the light intensity is proportional to braking intensity) and welcome lights (which accompany unlocking of the vehicle and are animated over all four lamps via turn signals and multicolor daytime running lights).

During operation, the assembly control unit is in communication with all four lamps. As long as all lamps are fully functional, the operation is standard as known from the state of the art for these various functions.

Once any primary control unit 6 detects that its secondary control unit 8 is not responding or is sending information about non-functionality of the secondary part 4 (or a part thereof), this primary control unit 6 sends the relevant information to the assembly control unit.

In a next step, the assembly control unit receives instruction from the vehicle main control unit to provide a desired illumination function, which in this embodiment is one of the above-mentioned animated functions.

If the function is non-symmetrical, i.e., only occurring on one side of the vehicle at a time, which in this embodiment only happens for the turn signal illumination, the illumination occurs as follows: A first side of the vehicle is the side where one of the lamps has a non-functional secondary part 4. If the turn signal is on the first side, both lamps on this side are operated in a simplified mode without animation. If the turn signal is on the opposite side, i.e., the vehicle is turning towards this side, where both lamps are fully operational, both lamps provide the animated turn signal.

If the function is symmetrical, the illumination function is adjusted. For hazard lights, the illumination is adjusted for all four lamps analogously to the first and second embodiment. I.e., if one of the lamps cannot provide the animation over both parts, none of the lamps provides hazard light illumination from their secondary part 4 and all their primary parts 3 are in simplified blinking mode for this illumination function.

For welcome lights, the adjustment in this embodiment does not depend on which part of which lamp is non-functional, or which module of this part is non-functional. The welcome light animation is adjusted to tell the driver that there is some malfunction, e.g., it is replaced by the simplified blinking off all the parts/lamps/modules which are included in providing the welcome lights in normal operation.

In other embodiments, however, the welcome light adjustment can depend on which part or module is non-functional. For example, if secondary part 4 of one of the headlights cannot provide daytime running light function, the welcome lights are adjusted to animation only by the turn signal. If the front grille is provided with multicolor LEDs, it can also include a different colored animation to inform the driver about a malfunction. If one of the lamps cannot provide a turn signal function on its secondary part 4, the welcome lights can be adjusted to only include brake lights on the back (if the non-functional part is on the back) and turn signals and daytime running lights on the front, or only include daytime running lights on the front (if the non-functional part is on the front) and turn signals on the back.

For brake light function, in the third embodiment, the animation is adjusted so that the brake lights are symmetrical. Their intensity is still proportional to braking intensity, but the function is only provided by both primary parts 3 of the taillights. The simplification for brake light animation thus does not require switching into non-animated mode, it only turns off the secondary part 4 brake light even on the fully functional secondary part 4.

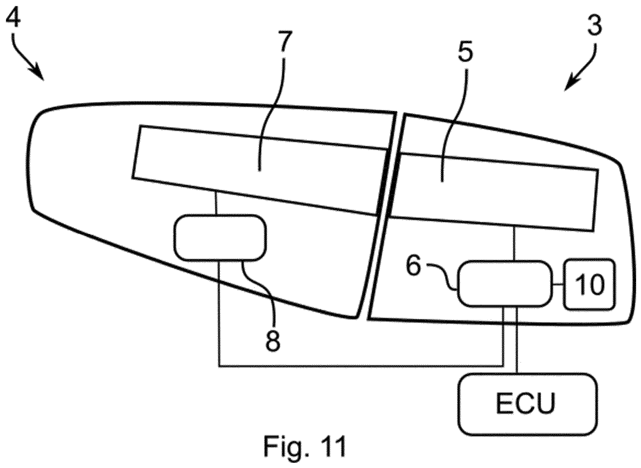

A fourth embodiment of the invention is the assembly from the first embodiment, wherein the primary control unit 6 includes a memory unit 10. This unit can be implemented in the same integrated circuit chip as the control unit 6 itself. The memory contains ID codes of multiple, e.g., twenty, different types of secondary parts 4. The primary control unit 6 is configured to request an ID code from the secondary part 4 and compare it with the codes it has in its memory unit 10. If the received code is not found in the memory unit 10, the secondary part 4 is considered non-functional. Other features of this embodiment are the same as described above for the first embodiment. Schematic construction of both lamps from this embodiment is as shown in fig. 11.

In a fifth embodiment, the fourth embodiment further uses the identification for checking functionality criteria, wherein the identification has impact on what criteria are used. Different types of secondary parts 4 have different current requirements because they have different numbers of LEDs and/or different types of LEDs. A current input into the secondary part 4 is one of parameters measured by the primary control unit 6 - this unit checks whether the current is within an acceptable range it has also stored in its memory. The used range is different for different secondary parts 4.

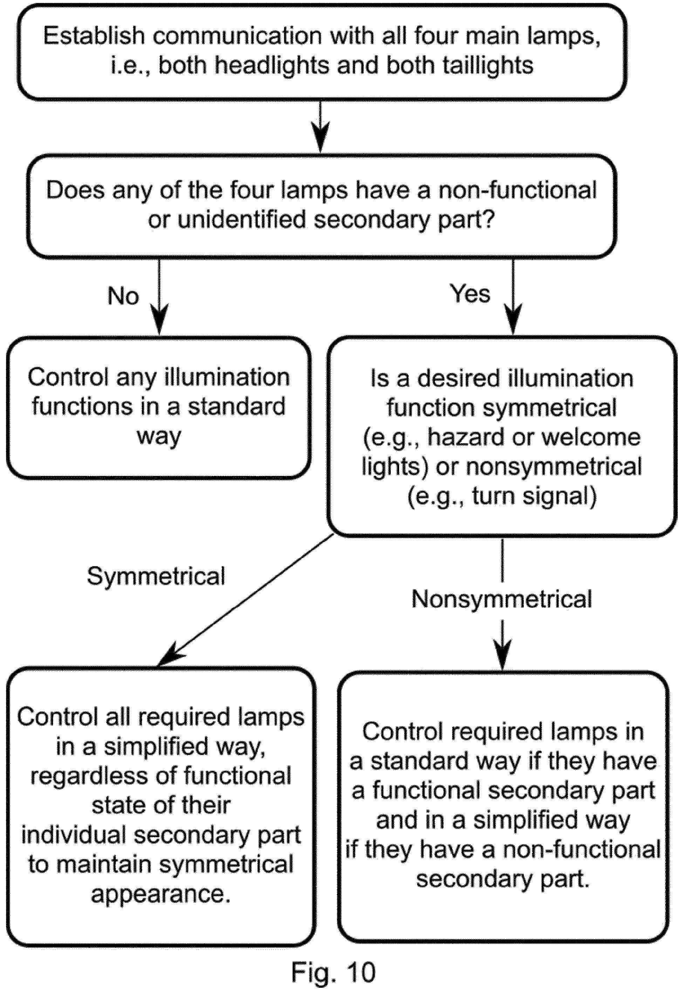

In a sixth embodiment, this identification and this using of different criteria for different secondary parts 4 is analogously implemented into the method according to the second embodiment or the third embodiment. A flowchart depicting this modified method is in fig. 10.

For example, in another embodiment, none of the lights is animated and the adjustment of the illumination function only includes limiting of the function to the primary part 3 of the second lamp 2 to keep a symmetrical appearance.

In another embodiment, further lamps are included in the assembly and controlled in a manner similar to the third embodiment. These further lamps can e.g., include side mirror lamps with turn signal lights, central lamp included in an illuminated front grille which visually connects both headlights, an additional rear lamp on a trunk lid 9, etc.

In another embodiment, the primary control units 6 of different lamps can communicate directly. Each primary control unit 6 can then be configured such that it adjusts function of the whole lamp or only its secondary part or only a part thereof, after receiving information about non-functionality of secondary part 4 of the other lamp.

### Reference list

- 1 -: first lamp
- 2 -: second lamp
- 3 -: primary part
- 4 -: secondary part
- 5 -: primary light source
- 6 -: primary control unit
- 7 -: secondary light source
- 8 -: secondary control unit
- 9 -: trunk lid
- 10 -: memory unit

## Claims

1. Vehicle lighting assembly comprising a first lamp (1), and a second lamp (2), wherein the first lamp (1) is a two-part vehicle lamp comprising a primary part (3) and a secondary part (4), wherein
• the primary part (3) has a primary light source (5) and a primary control unit (6) for controlling the primary light source (5),
• and the secondary part (4) has a secondary light source (7) and a secondary control unit (8) for controlling the secondary light source (7),
• wherein the control units are communicatively connected, and the secondary control unit (8) is configured for controlling the secondary light source (7) based on instructions received from the primary control unit (6),
**characterized in that**
• the primary control unit (6) is configured to verify whether the secondary part (4) is functional and if the secondary part (4) is non-functional, the primary control unit (6) is further configured to communicate information about the secondary part (4) being non-functional to another component of the assembly,
• and the assembly is configured for adjusting illumination function of the second lamp (2) based on the information about the secondary part (4) being non-functional.

2. The vehicle lighting assembly according to claim 1 **wherein** the another component of the assembly is selected from a control unit of the assembly, a control unit of the vehicle and a control unit of the second lamp (2).

3. The vehicle lighting assembly according to any one of the preceding claims **wherein** the adjusting of illumination function is further based on a condition of the vehicle.

4. The vehicle lighting assembly according to any one of the preceding claims **wherein** the adjusting of illumination function includes turning off of an animated illumination function of the second lamp (2).

5. The vehicle lighting assembly according to any one of the preceding claims **wherein** the second lamp (2) is a two-part lamp laterally symmetrical with respect to the first lamp (1) when mounted on a vehicle, wherein the adjusting of illumination function includes turning off of the second lamp's (2) secondary part (4).

6. The vehicle lighting assembly according to any one of the preceding claims **wherein** the first lamp (1) is a headlight, or a taillight, and the second lamp (2) is a different headlight or taillight.

7. The vehicle lighting assembly according to any one of the preceding claims **wherein** the primary control unit (6) is provided with a memory unit (10) which comprises data for identification of multiple predefined secondary parts (4), wherein the primary control unit (6) is configured to check, during or before the functionality verification, whether the secondary part (4) is one of the predefined secondary parts (4).

8. The vehicle lighting assembly according to claim 7 **wherein** the secondary part (4) is considered non-functional if it is not identified as one of the predefined secondary parts (4).

9. The vehicle lighting assembly according to any on of claims 7 or 8 **wherein** the primary control unit (6) is configured to use different criteria of functionality for different secondary parts (4).

10. Method of controlling the vehicle illumination assembly according to any one of the preceding claims, the assembly comprising at least a first lamp (1), which is a two-part lamp, and a second lamp (2), **characterized in that** it comprises:
• detecting by a primary control unit (6) of a primary part (3) of the first lamp (1) that a secondary part (4) of the first lamp (1) in non-functional, and
• adjusting illumination function of at least the second lamp (2) based on the detection that the secondary part (4) is non-functional.

11. The method according to claim 10 **wherein** it further comprises checking a condition of the vehicle and adjusting the illumination function only if the condition is met.

12. The method according to claim 11 **wherein** the condition includes checking whether a desired illumination function requires synchronization or symmetry between illumination from the first lamp (1) and illumination from the second lamp (2) when mounted on a vehicle, wherein if the synchronization or symmetry is required, the second lamp (2) is controlled to provide illumination synchronized or symmetrical with illumination of the first lamp (1) with the non-functional secondary part (4).

13. The method according to claim 12 **wherein** the illumination function to be adjusted is a turn signal animation and the checking of the condition includes checking whether turn signals of the vehicle are to be used to indicate turning direction or as hazard lights, wherein the turn signal animation is simplified or turned off in the second lamp (2) if the turn signals of the vehicle are to be used as hazard lights.

14. The method according to any one of claims 10 to 13 **wherein** the second lamp (2) is a two-part lamp, and the adjusting of illumination function includes turning off of the second lamp's (2) secondary part (4).

15. The method according to any one of claims 10 to 14 **wherein** the step of detecting of functionality includes trying to identify the secondary part (4) and checking whether the secondary part (4) is one of multiple predefined secondary parts (4).

## Patentansprüche

1. Fahrzeugbeleuchtungsanordnung, umfassend eine erste Lampe (1) und eine zweite Lampe (2), wobei die erste Lampe (1) eine zweiteilige Fahrzeuglampe ist, die ein primäres Teil (3) und ein sekundäres Teil (4) umfasst, wobei
• das primäre Teil (3) eine primäre Lichtquelle (5) und eine primäre Steuereinheit (6) zum Steuern der primären Lichtquelle (5) aufweist,
• und das sekundäre Teil (4) eine sekundäre Lichtquelle (7) und eine sekundäre Steuereinheit (8) zum Steuern der sekundären Lichtquelle (7) aufweist,
• wobei die Steuereinheiten kommunikativ verbunden sind und die sekundäre Steuereinheit (8) zum Steuern der sekundären Lichtquelle (7) auf Grundlage von Anweisungen, die von der primären Steuereinheit (6) empfangen werden, konfiguriert ist,
**dadurch gekennzeichnet, dass**
• die primäre Steuereinheit (6) dazu konfiguriert ist, zu überprüfen, ob das sekundäre Teil (4) funktionsfähig ist, und wenn das sekundäre Teil (4) nicht funktionsfähig ist, die primäre Steuereinheit (6) ferner dazu konfiguriert ist, die Information, dass das sekundäre Teil (4) nicht funktionsfähig ist, an eine weitere Komponente der Anordnung zu kommunizieren,
• und die Anordnung dazu konfiguriert ist, die Beleuchtungsfunktion der zweiten Lampe (2) auf Grundlage der Information, dass das sekundäre Teil (4) nicht funktionsfähig ist, einzustellen.

2. Fahrzeugbeleuchtungsanordnung nach Anspruch 1, **wobei** die weitere Komponente der Anordnung aus einer Steuereinheit der Anordnung, einer Steuereinheit des Fahrzeugs und einer Steuereinheit der zweiten Lampe (2) ausgewählt ist.

3. Fahrzeugbeleuchtungsanordnung nach einem der vorhergehenden Ansprüche, **wobei** das Einstellen der Beleuchtungsfunktion ferner auf einem Zustand des Fahrzeugs basiert.

4. Fahrzeugbeleuchtungsanordnung nach einem der vorhergehenden Ansprüche, **wobei** das Einstellen der Beleuchtungsfunktion das Ausschalten einer animierten Beleuchtungsfunktion der zweiten Lampe (2) umfasst.

5. Fahrzeugbeleuchtungsanordnung nach einem der vorhergehenden Ansprüche, **wobei** die zweite Lampe (2) eine zweiteilige Lampe ist, die, wenn sie an einem Fahrzeug montiert ist, in Bezug auf die erste Lampe (1) seitlich symmetrisch ist, wobei das Einstellen der Beleuchtungsfunktion das Ausschalten des sekundären Teils (4) der zweiten Lampe (2) umfasst.

6. Fahrzeugbeleuchtungsanordnung nach einem der vorhergehenden Ansprüche, **wobei** die erste Lampe (1) ein Scheinwerfer oder eine Heckleuchte ist und die zweite Lampe (2) ein anderer Scheinwerfer oder eine andere Heckleuchte ist.

7. Fahrzeugbeleuchtungsanordnung nach einem der vorhergehenden Ansprüche, **wobei** die primäre Steuereinheit (6) mit einer Speichereinheit (10) versehen ist, die Daten zur Identifikation mehrerer vordefinierter sekundärer Teile (4) umfasst, wobei die primäre Steuereinheit (6) dazu konfiguriert ist, während oder vor der Funktionalitätsüberprüfung zu prüfen, ob das sekundäre Teil (4) eines von den vordefinierten sekundären Teilen (4) ist.

8. Fahrzeugbeleuchtungsanordnung nach Anspruch 7, **wobei** das sekundäre Teil (4) für nicht funktionsfähig erachtet wird, wenn es nicht als eines der vordefinierten sekundären Teile (4) identifiziert ist.

9. Fahrzeugbeleuchtungsanordnung nach einem der Ansprüche 7 oder 8, **wobei** die primäre Steuereinheit (6) dazu konfiguriert ist, für unterschiedliche sekundäre Teile (4) unterschiedliche Kriterien für Funktionsfähigkeit anzuwenden.

10. Verfahren zum Steuern der Fahrzeugbeleuchtungsanordnung nach einem der vorhergehenden Ansprüche, wobei die Anordnung wenigstens eine erste Lampe (1), die eine zweiteilige Lampe ist, und eine zweite Lampe (2) umfasst, **dadurch gekennzeichnet, dass** es Folgendes umfasst:
• Erkennen, durch eine primäre Steuereinheit (6) eines primären Teils (3) der ersten Lampe (1), dass ein sekundäres Teil (4) der ersten Lampe (1) nicht funktionsfähig ist, und
• Einstellen der Beleuchtungsfunktion von mindestens der zweiten Lampe (2) auf Grundlage des Erkennens, dass das sekundäre Teil (4) nicht funktionsfähig ist.

11. Verfahren nach Anspruch 10, **wobei** es ferner das Prüfen eines Zustands des Fahrzeugs und Einstellen der Beleuchtungsfunktion ausschließlich dann, wenn die Bedingung erfüllt ist, umfasst.

12. Verfahren nach Anspruch 11, **wobei** die Bedingung umfasst, zu prüfen, ob eine gewünschte Beleuchtungsfunktion Synchronisation oder Symmetrie zwischen Beleuchtung von der ersten Lampe (1) und Beleuchtung von der zweiten Lampe (2), wenn sie an einem Fahrzeug montiert ist, erfordert, wobei dann, wenn die Synchronisation oder Symmetrie erforderlich ist, die zweite Lampe (2) so gesteuert wird, dass sie Beleuchtung bereitstellt, die mit Beleuchtung der ersten Lampe (1) mit dem nicht funktionsfähigen sekundären Teil (4) synchronisiert oder symmetrisch ist.

13. Verfahren nach Anspruch 12, **wobei** die einzustellende Beleuchtungsfunktion eine Blinksignalanimation ist und die Prüfung der Bedingung die Prüfung umfasst, ob Blinksignale des Fahrzeugs zu verwenden sind, um eine Abbiegerichtung anzugeben, oder als Gefahrenleuchten, wobei die Blinksignalanimation in der zweiten Lampe (2) vereinfacht oder ausgeschaltet ist, wenn die Abbiegesignale des Fahrzeugs als Gefahrenleuchten zu verwenden sind.

14. Verfahren nach einem Ansprüche 10 bis 13, **wobei** die zweite Lampe (2) eine zweiteilige Lampe ist und das Einstellen der Beleuchtungsfunktion das Ausschalten des sekundären Teils (4) der zweiten Lampe (2) umfasst.

15. Verfahren nach einem der Ansprüche 10 bis 14, **wobei** der Schritt des Erkennens von Funktionsfähigkeit den Versuch, das sekundäre Teil (4) zu identifizieren, und die Prüfung, ob das sekundäre Teil (4) eines von mehreren vordefinierten sekundären Teilen (4) ist, umfasst.

## Revendications

1. Ensemble d'éclairage de véhicule comprenant une première lampe (1) et une deuxième lampe (2), la première lampe (1) étant une lampe en deux parties comprenant une première partie (3) et une deuxième partie (4),
• la première partie (3) comportant une première source de lumière (5) et une première unité de commande (6) permettant de commander la première source de lumière (5),
• et la deuxième partie (4) comportant une deuxième source de lumière (7) et une deuxième unité de commande (8) permettant de commander la deuxième source de lumière (7),
• les unités de commande étant connectées entre elles pour communiquer et la deuxième unité de commande (8) étant configurée pour commander la deuxième source de lumière (7) sur la base d'instructions reçues de la première unité de commande (6),
**caractérisé en ce que**
• la première unité de commande (6) est configurée pour vérifier si la deuxième partie (4) est opérationnelle et, si la deuxième partie (4) n'est pas opérationnelle, **en ce que** la première unité de commande (6) est en outre configurée pour communiquer à un autre composant de l'ensemble des informations indiquant que la deuxième partie (4) n'est pas opérationnelle,
• **en ce que** l'ensemble est configuré pour adapter la fonction d'éclairage de la deuxième lampe (2) sur la base d'informations indiquant que la deuxième partie (4) n'est pas opérationnelle.

2. Ensemble d'éclairage de véhicule selon la revendication 1 **caractérisé en ce que** l'autre composant de l'ensemble est choisi entre une unité de commande de l'ensemble, une unité de commande du véhicule et une unité de commande de la deuxième lampe (2).

3. Ensemble d'éclairage de véhicule selon l'une des revendications précédentes **caractérisé en ce que** l'adaptation de la fonction d'éclairage dépend également d'une condition du véhicule.

4. Ensemble d'éclairage du véhicule selon l'une des revendications précédentes **caractérisé en ce que** l'adaptation de la fonction d'éclairage comprend la désactivation d'une fonction d'éclairage animé de la deuxième lampe (2).

5. Ensemble d'éclairage de véhicule selon l'une des revendications précédentes **caractérisé en ce que** la deuxième lampe (2) est une lampe en deux parties, latéralement symétrique par rapport à la première lampe (1) lorsqu'elle est montée sur un véhicule, l'adaptation de la fonction d'éclairage comprenant l'extinction de la deuxième partie (4) de la deuxième lampe (2).

6. Ensemble d'éclairage de véhicule selon l'une des revendications précédentes **caractérisé en ce que** la première lampe (1) est un phare ou un feu arrière et **en ce que** la deuxième lampe (2) est un phare ou un feu arrière différent.

7. Ensemble d'éclairage du véhicule selon l'une des revendications précédentes **caractérisé en ce que** la première unité de commande (6) est pourvue d'une unité de mémoire (10) comprenant des données d'identification de plusieurs deuxièmes pièces prédéfinies (4), la première unité de commande (6) étant configurée pour vérifier, pendant ou avant la vérification de la fonctionnalité, si la deuxième pièce (4) est l'une des deuxièmes pièces prédéfinies (4).

8. Ensemble d'éclairage de véhicule selon la revendication 7 **caractérisé en ce que** la deuxième pièce (4) est considérée comme n'étant pas opérationnelle si elle n'est pas identifiée comme étant l'une des deuxièmes pièces prédéfinies (4).

9. Ensemble d'éclairage de véhicule selon l'une des revendications 7 ou 8 **caractérisé en ce que** la première unité de commande (6) est configurée pour utiliser différents critères de fonctionnalité différents pour différentes deuxièmes pièces (4).

10. Procédé de commande de l'ensemble d'éclairage de véhicule selon l'une des revendications précédentes, l'ensemble comprenant au moins une première lampe (1) en deux parties et une deuxième lampe (2) **caractérisé en ce qu'**il comprend :
• la détection, par une première unité de commande (6) d'une première partie (3) de la première lampe (1), qu'une deuxième partie (4) de la première lampe (1) n'est pas opérationnelle et
• l'adaptation de la fonction d'éclairage de la deuxième lampe (2) au moins sur la base de la détection du fait que la deuxième partie (4) n'est pas opérationnelle.

11. Procédé selon la revendication 10 **caractérisé en ce qu'**il comprend en outre la vérification d'une condition du véhicule et l'adaptation de la fonction d'éclairage uniquement si cette condition est remplie.

12. Procédé selon la revendication 11 **caractérisé en ce que** la condition comprend la vérification si une fonction d'éclairage souhaitée nécessite une synchronisation ou une symétrie entre l'éclairage provenant de la première lampe (1) et celui provenant de la deuxième lampe (2) lorsqu'elles sont montées sur un véhicule, si la synchronisation ou la symétrie est requise, **en ce que** la deuxième lampe (2) est commandée pour fournir un éclairage synchronisé ou symétrique entre celui de la première lampe (1) et celui de la deuxième partie (4) non opérationnelle.

13. Procédé selon la revendication 12 **caractérisé en ce que** la fonction d'éclairage à adapter est une animation des clignotants et **en ce que** la vérification de la condition consiste entre autres à vérifier si les clignotants du véhicule doivent être utilisés pour indiquer le sens de virage ou comme feux de détresse, l'animation des clignotants étant simplifiée ou désactivée dans la deuxième lampe (2) si les clignotants du véhicule doivent être utilisés comme feux de détresse.

14. Procédé selon l'une des revendications 10 à 13 **caractérisé en ce que** la deuxième lampe (2) est une lampe en deux parties et **en ce que** et l'adaptation de la fonction d'éclairage comprend la désactivation de la deuxième partie (4) de la deuxième lampe (2).

15. Procédé selon l'une des revendications 10 à 14 **caractérisé en ce que** l'étape de détection de la fonctionnalité comprend la tentative d'identification de la deuxième partie (4) et la vérification si la deuxième partie (4) est l'une des deuxièmes parties (4) prédéfinies.
